# FASCICULE DE BREVET EUROPEEN

(11) **EP 3 076 245 B1**
(45) Date de publication et mention de la délivrance du brevet: **17.03.2021**
(21) Numéro de dépôt: 15248005.9
(22) Date de dépôt: 02.04.2015
(51) Int. Cl.: F16F 9/30, G04B 37/04, G04B 31/02

(54) **DISPOSITIF AMORTISSEUR NOTAMMENT POUR COMPOSANT MICROMÉCANIQUE HORLOGER**
DÄMPFUNGSVORRICHTUNG, INSBESONDERE FÜR MIKROMECHANISCHE UHRKOMPONENTE
DAMPING DEVICE, IN PARTICULAR FOR MICROMECHANICAL CLOCK COMPONENT

(43) Date de publication de la demande: 05.10.2016
(73) Titulaire: CSEM Centre Suisse d'Electronique et de Microtechnique SA, 2002 Neuchâtel (CH)
(72) Inventeur: Droz, Serge, 2014 Bôle (CH); Musy, Grégory, 2016 Cortaillod (CH); Domine, Emmanuel, 2034 Peseux (CH); Barrot, François, 3235 Erlach (CH)
(74) Mandataire: P&TS SA (AG, Ltd.)

(56) Documents cités:
- DE-U- 1 745 993
- FR-A1- 3 002 997
- US-A1- 2012 176 871

## Description

### Domaine technique

La présente invention se rapporte au domaine de la microtechnique et plus particulièrement à celui de l'horlogerie. L'invention concerne un procédé de fabrication d'un dispositif amortisseur de chocs et/ou de vibrations pour composant micromécanique, et plus particulièrement pour composant micromécanique horloger tel qu'une bride antichoc fixant le mouvement au boitier d'une montre ou une butée antichoc rapportée au niveau du pivot virtuel d'un système à guidage flexible notamment.

### Etat de la technique

Dans le domaine de la micromécanique de haute précision, et celui de l'horlogerie en particulier, il est bien connu d'utiliser des dispositifs dits antichocs pour protéger des composants, par exemple ceux d'une montre.

De tels dispositifs consistent par exemple en des paliers antichocs ou des brides antichocs pour protéger la montre contre les chocs au niveau de l'interface boîtier-mouvement tels que décrits dans les documents CH 700496, EP 1 696 286, EP 2 629 160, EP 1 975 749 ou CH 701549 par exemple.

Le document CH700496 décrit un palier antichoc pour pièce d'horlogerie comprenant un corps, un coussinet monté dans le corps et présentant un trou apte à recevoir un pivot, des moyens élastiques agissant axialement sur le coussinet et des moyens de guidage pour forcer le coussinet à se déplacer uniquement axialement à l'encontre de l'action axiale exercée par les moyens élastiques lors d'un déplacement radial du pivot. Lesdits moyens de guidages et élastiques consistent en des lames élastiques précontraintes. Ces lames sont plus rigides radialement qu'axialement de sorte que le coussinet se déplace quasiment uniquement axialement, même lors de chocs radiaux.

Le document FR3002997 décrit un amortisseur de vibrations comprenant : des première et deuxième couches de contrainte constituées d'un matériau polymère, les couches de contrainte étant superposées et scellées à leurs périphéries, et une couche d'amortissement constituée d'un fluide thermo-visqueux à température ambiante, la couche d'amortissement s'étendant entre les première et deuxième couches de contrainte.

Le document US2012176871 décrit une structure amortissant les chocs composé d'un corps viscoélastique qui, lors d'un choc, réduit le choc à transmettre en modifiant sa forme tout en convertissant l'énergie cinétique en énergie thermique, et réduit rapidement la force élastique en réduisant la conversion de l'énergie cinétique en énergie élastique accompagnant le changement de forme.

Le document DE1745993 décrit un mouvement horloger maintenu dans un boitier par l'intermédiaire de bras et d'un élément en caoutchouc.

Ce type de dispositif, bien que permettant de protéger le pivot contre les chocs, n'absorbe pas l'énergie cinétique du choc de sorte que ladite énergie est transmise au reste du mouvement qui peut être détérioré.

Le document EP 1 696 286 décrit un palier amortisseur de chocs pour pièce d'horlogerie, et plus particulièrement pour un tigeron d'un axe d'un mobile d'une pièce d'horlogerie, comprenant un bloc support destiné à être chassé, fixé ou formé dans le bâti de ladite pièce d'horlogerie, ledit bloc support étant pourvu d'un logement prévu pour recevoir un chaton supportant une pierre percée traversée par le tigeron et une pierre contre-pivot. Le chaton est maintenu dans le logement à l'aide d'un ressort à déformation axiale et radiale qui est formé par un anneau périphérique rigide monté en force contre la paroi du logement en prenant appui sur un bourrelet situé au fond du logement de façon à ménager un espace permettant un certain débattement axial du ressort, un support central rigide sensiblement annulaire et des moyens élastiques reliant ledit anneau périphérique audit support central. Accessoirement, l'espace entre les bras du ressort peut être rempli par une substance « amortissante » telle qu'un polymère par exemple.

Ce type de palier amortisseur, bien qu'agissant élastiquement aussi bien dans le plan qu'en dehors du plan sans nécessiter d'une pièce intermédiaire, présente l'inconvénient de ne présenter qu'une réponse élastique à un choc. Ainsi, l'énergie cinétique du choc n'est pas absorbée et peut se propager au reste du mouvement, au risque de l'endommager. On notera que dans la variante d'exécution dans laquelle l'espace entre les bras du ressort est remplit par un polymère amortissant, il n'y a pas d'espace libre pour que les lames puissent fléchir et les chocs radiaux ne sont donc pas amortis, or les chocs radiaux sont nettement plus fréquents que les chocs hors-plan.

Le document EP 2 629 160 décrit un amortisseur de choc comportant un élément de tampon latéral disposé entre un boîtier de montre-bracelet et un module de montre, dans lequel l'élément de tampon latéral comprend une pluralité de couches tampons présentant respectivement différentes transmissibilités des vibrations pour des fréquences prédéterminées. Ainsi, lorsque le boîtier de montre-bracelet est soumis à des vibrations dues à des chocs externes, les différentes couches tampons de l'élément de tampon latéral atténuent et absorbent les vibrations à basse fréquence et à haute fréquence de vibration, respectivement.

Le document EP 1 975 749 décrit une pièce d'horlogerie dont le mouvement est tenu élastiquement. Ladite pièce d'horlogerie comprend une boite, un mouvement, un organe élastique amortisseur tenant le mouvement à l'intérieur de la boîte et un organe de commande manuel traversant une paroi de la boite et connecté au mouvement, ladite pièce d'horlogerie comprenant en outre un tube rigide traversant ladite paroi, tube dans lequel est engagé l'organe de commande manuel, et un manchon élastique amortisseur interposé entre le tube et ladite paroi. Le manchon élastique amortisseur est formé en une seule pièce avec l'organe élastique amortisseur qui entoure le mouvement, ces derniers étant en caoutchouc.

Ces deux types de dispositif présentent l'inconvénient de ne pas maintenir précisément le mouvement en place dans le boîtier, de ne pas procurer un repositionnement correct du mouvement après le choc et de ne pas protéger le mouvement contre les chocs axiaux.

Le document CH 701549 décrit une montre antichoc comportant des absorbeurs de chocs pour monter le mouvement de montre à l'intérieur du boîtier. Chaque absorbeur de choc comporte une pluralité de portions indépendantes adaptées pour absorber l'énergie des chocs et des vibrations dans différentes portions du spectre de fréquence, une première portion d'absorbeur de choc étant faite de métal et une autre portion du même absorbeur de choc étant faite d'un matériau plus mou, tel que synthétique, caoutchouc, colloïde ou matériau gel par exemple.

Bien que ce type de dispositif permette de filtrer autant les basses fréquences que les hautes fréquences, et de permettre un repositionnement du mouvement au moyen de boudins, il présente néanmoins l'inconvénient d'être particulièrement encombrant.

Or, les dernières avancées technologiques dans le domaine de la micromécanique de haute précision, et plus particulièrement dans celui de l'horlogerie, font de plus fréquemment appel au silicium qui, bien que présentant de nombreux avantages, tels que de présenter aucune fatigue, d'être amagnétique, ou de permettre la fabrication de pièces en série avec une grande précision tout en offrant une grande liberté de conception, présente néanmoins l'inconvénient d'être fragile et cassant de sorte qu'il est peu résistant lors de chocs accidentels. De telles pièces d'horlogeries en silicium sont notamment décrites dans les documents EP 1 422 436, EP 2 105 806 et EP 1 736 838.

Le document EP 1 422 436 décrit un ressort spiral destiné à équiper le balancier d'une pièce d'horlogerie mécanique et formé d'un barreau en spirale obtenu dans du silicium monocristallin.

Le document EP 2 105 806 décrit un mécanisme d'échappement agencé pour transmettre des impulsions d'énergie mécanique d'une source motrice à un régulateur oscillant d'une pièce d'horlogerie par l'intermédiaire d'un ressort-lame travaillant en flambage autour d'un point d'inflexion, ledit ressort-lame étant susceptible d'accumuler l'énergie issue de la source motrice entre deux impulsions et de la transmettre au régulateur oscillant à chaque impulsion par des bascules. Le ressort-lame est monté sur un châssis et ledit ressort-lame et/ou le châssis sont réalisés en silicium, d'une seule pièce ou non.

Le document EP 1 736 838 décrit un oscillateur mécanique comportant un système d'articulations flexibles montées autour d'un pivot virtuel, capable d'augmenter significativement la réserve de marche de la montre.

Les amortisseurs de choc de l'art antérieur ne sont pas adaptés pour ce type de système, or ils sont particulièrement sensibles aux chocs et/ou aux vibrations, d'autant plus que ce type de système est usuellement fabriqué dans du silicium.

Il existe donc un besoin pour un dispositif antichoc apte à absorber des chocs et/ou des vibrations dans toutes les directions, et plus particulièrement les directions radiale et axiale, à dissiper tout ou partie de l'énergie cinétique induite par les chocs et à être intégré en différents endroits d'une pièce d'horlogerie, afin d'éviter toute détérioration des pièces de la montre et plus particulièrement les pièces obtenues dans du silicium, qui est fragile et cassant, telles que les mécanismes à guidage flexible par exemple.

### Divulgation de l'invention

L'un des buts de l'invention est donc de remédier à ces inconvénients en procurant un dispositif amortisseur pour composant micromécanique apte à absorber des chocs axiaux et radiaux et/ou des vibrations tout en dissipant tout ou partie de l'énergie cinétique induite par lesdits chocs et/ou lesdites vibrations.

Un autre but de l'invention est de procurer un dispositif amortisseur par un procédé de fabrication de conception simple et peu onéreuse.

A cet effet et conformément à l'invention, il est proposé un procédé de fabrication d'un dispositif amortisseur de chocs et/ou de vibrations tel que défini dans la revendication 1 annexée.

On comprend bien que l'élasticité du ou des éléments flexibles exerce une force de rappel d'autant plus grande que le déplacement est important, résultant en des oscillations autour de la position initiale. La dissipation d'énergie par cisaillement de la couche dissipative permet d'amortir les oscillations et de ramener rapidement le ou les éléments flexibles dans leur position d'origine.

De préférence, le ou les éléments flexibles, ainsi que la couche dissipative, sont conçus de telle manière que le retour du dispositif amortisseur dans sa position initiale de repos soit parfait, i.e. qu'il n'y ait pas de déformation plastique.

De préférence, le dispositif amortisseur comporte au moins deux éléments flexibles et au moins une couche dissipative s'étendant entre lesdits éléments flexibles, ladite couche dissipative étant solidaire au moins partiellement de chacun des éléments flexibles. Une telle construction permet de procurer un cisaillement plus important de la couche dissipative et donc un amortissement plus rapide.

D'une manière générale, le dispositif pourra comporter n éléments flexibles s'étendant sensiblement parallèlement les uns par rapport aux autres et n-1 éléments dissipatifs s'étendant entre deux éléments flexibles consécutifs, chaque couche dissipative étant solidaire au moins partiellement desdits deux éléments flexibles consécutifs, et dans lequel n est un nombre entier supérieur ou égal à 3.

Chaque couche dissipative est obtenue dans au moins un matériau viscoélastique et présente un module de cisaillement au moins 10 fois inférieur au module de cisaillement du ou des éléments flexibles.

Selon une variante d'exécution, chaque couche dissipative est constituée d'un empilement d'au moins deux couches obtenues dans au moins deux matériaux viscoélastiques différents.

Selon une autre variante d'exécution, chaque couche dissipative est constituée d'au moins deux segments respectivement obtenus dans un matériau viscoélastique.

De préférence, chaque couche dissipative présente un facteur d'amortissement au moins 5 fois supérieur au facteur d'amortissement du ou des éléments flexibles.

Par ailleurs, chaque couche dissipative est obtenue dans un polymère et, de préférence, un élastomère choisi parmi la liste comprenant les polyuréthanes, le cis-1,4-polyisoprène (NR), le polyisoprène synthétique (IR), le polybutadiène (BR), le copolymère styrène-butadiène (SBR), les polyisoprènes, les polyisobutylènes, les copolymères butadiène-acrylonitrile, les copolymères éthylène-propylène, les terpolymères éthylène-propylène-diène, le polyéther bloc amide (PEBA), les polyoléfines élastomères telles que le polyisobutylène (PIB), l'éthylène-propylène (EPR ou EPM) et l'éthylène-propylène-diène-monomère (EPDM), le copolymère éthylène-acétate de vinyle (EVA ou EVM), le copolymère éthylène acrylique (AEM), les élastomères polyacryliques (ACM), les élastomères d'épichlorhydrine (CO et ECO), ou une combinaison de ces derniers.

De plus, le ou les éléments flexibles sont obtenus dans un métal, un matériau céramique ou un cristal tel que du silicium présentant de nombreux avantages, tels que de ne présenter aucune fatigue, d'être amagnétique, de ne pas comporter de domaine plastique, ou de permettre la fabrication de pièces en série avec une grande précision tout en offrant une grande liberté de conception.

Le ou les éléments flexibles sont rectilignes ou incurvés.

Lesdits éléments flexibles incurvés présentent un rayon de courbure constant, deux éléments flexibles incurvés adjacents présentant un rayon de courbure différent et un même centre de courbure.

Selon une autre variante d'exécution, chaque élément flexible comporte une partie centrale rectiligne et deux parties distales rectilignes s'étendant sensiblement perpendiculairement à la partie centrale et s'étendant depuis les extrémités de ladite partie centrale de part et respectivement d'autre de cette dernière.

De plus, le ou les éléments flexibles présentent une longueur au moins 3 à 100 fois supérieure à l'épaisseur desdits éléments flexibles et, préférablement, présentent une longueur au moins 5 à 30 fois supérieure à l'épaisseur desdits éléments flexibles.

De préférence, le ou les éléments flexibles présentent une longueur comprise entre 0,1 et 10 mm.

De préférence, l'épaisseur de la couche dissipative est comprise entre 10 µm et 2 mm, et plus préférentiellement entre 10 µm et 1 mm.

Par ailleurs, le poids du dispositif amortisseur suivant l'invention est compris entre 0,01 gramme et 50 grammes.

Selon un mode particulier de réalisation du dispositif suivant l'invention, l'élement flexible consiste en une lame.

Selon une autre variante d'exécution, le dispositif amortisseur comporte une pluralité d'ensembles amortisseurs respectivement constitués d'au moins un élément flexible et d'au moins une couche dissipative, lesdits ensembles amortisseurs étant séparés par un espace vide.

Une éventuelle application du dispositif amortisseur décrit concerne la fabrication d' une bride antichocs et/ou anti-vibrations pour une pièce d'horlogerie qui comprend au moins un boitier et un mouvement s'étendant à l'intérieur dudit boitier, ladite bride antichoc tenant le mouvement à l'intérieur du boitier ; ladite bride antichoc est remarquable en ce qu'elle est constituée d'un dispositif amortisseur comprenant au moins deux éléments flexibles s'étendant sensiblement parallèlement et au moins une couche dissipative s'étendant entre lesdits éléments flexibles, ladite couche dissipative étant solidaire au moins partiellement de chacun des éléments flexibles, et en ce que chaque élément flexible comporte une partie centrale rectiligne et deux parties distales rectilignes s'étendant sensiblement perpendiculairement à la partie centrale et s'étendant depuis les extrémités de ladite partie centrale de part et respectivement d'autre de cette dernière, l'extrémité libre d'une première partie distale étant solidaire du boitier et l'extrémité libre de la seconde partie distale étant solidaire du mouvement.

Une autre application du dispositif amortisseur décrit concerne une butée antichocs et/ou anti-vibrations pour une pièce d'horlogerie ; ladite butée est remarquable en ce qu'elle est constituée d'une couronne centrale depuis laquelle s'étend trois dispositifs amortisseurs, uniformément répartis autour de la couronne, chaque dispositif amortisseur étant constitué d'au moins deux lames flexibles incurvées de longueurs et de rayons de courbure différents et d'une couche dissipative s'étendant entre lesdites lames flexibles incurvées.

De préférence, l'extrémité libre de chaque dispositif amortisseur est terminée par une excroissance radiale comprenant un évidement rempli d'un matériau viscoélastique formant la couche dissipative, ladite excroissance radiale étant solidaire de la lame flexible extérieure d'un dispositif amortisseur adjacent.

Ledit procédé de fabrication d'un amortisseur de chocs et/ou de vibrations comporte au moins les étapes suivantes de formation d'au moins un élément flexible et de solidarisation d'au moins une couche dissipative sur tout ou partie dudit élément flexible, ladite couche dissipative présentant un module de cisaillement inférieur au module de cisaillement de l'élément flexible et un facteur d'amortissement supérieur au facteur d'amortissement dudit élément flexible.

Ladite étape de formation de l'élément flexible consiste à déposer un masque sur un wafer en silicium puis à procéder à une gravure dudit wafer.

Ledit masque est déposé sur le wafer puis structuré par photolithographie ou par lithographie à faisceau d'électrons.

Par ailleurs, ladite gravure consiste en une gravure chimique ou en une gravure ionique réactive ou une gravure au plasma.

De préférence, le procédé consiste à former deux éléments flexibles parallèles à partir d'un wafer en silicium puis à déposer, entre lesdits éléments flexibles, une matière polymérisable sous forme liquide présentant, après polymérisation, un module de cisaillement inférieur au module de cisaillement du silicium et un facteur d'amortissement supérieur au facteur d'amortissement du silicium, puis à polymériser ladite matière polymérisable.

De manière avantageuse, le procédé consiste à former d'une part deux lames flexibles parallèles et un évidement formant un réservoir, ledit évidement débouchant entre les deux éléments flexibles, à partir d'un wafer en silicium puis à déposer, dans l'évidement, une matière polymérisable sous forme liquide présentant, après polymérisation, un module de cisaillement inférieur au module de cisaillement du silicium et un facteur d'amortissement supérieur au facteur d'amortissement du silicium, puis, après que ladite matière polymérisable se soit répandu par capillarité dans tout l'espace séparant les deux éléments flexibles, à polymériser ladite matière polymérisable.

Ladite matière polymérisable consiste en un polymère photosensible et l'étape de polymérisation consiste à exposer ladite matière polymérisable à un rayonnement ultraviolet.

De préférence, ladite matière polymérisable consiste en du polyuréthane photosensible.

Selon une variante d'exécution du procédé suivant l'invention, la matière est polymérisable par des moyens thermiques.

D'une manière générale, et de préférence, le procédé de fabrication d'un dispositif amortisseur comporte au moins les étapes suivantes de :
a. formation d'au moins deux éléments flexibles ainsi qu'un évidement formant un réservoir, ledit évidement débouchant entre les deux éléments flexibles,
b. dépôt, dans ledit évidement, d'une matière polymérisable sous forme liquide présentant, après polymérisation, un module de cisaillement inférieur au module de cisaillement des éléments flexibles et un facteur d'amortissement supérieur au facteur d'amortissement des éléments flexibles (1a, 1b),
c. après que ladite matière polymérisable se soit répandue par capillarité dans au moins une partie de l'espace séparant les deux éléments flexibles (1a, 1b), polymérisation de ladite matière polymérisable.

Par ailleurs, de préférence, lesdits éléments flexibles s'étendent sensiblement parallèlement et sont obtenus dans du silicium. De plus, préférentiellement, la matière polymérisable se répand dans la totalité de l'évidement et de l'espace séparant les deux éléments flexibles.

### Brève description des dessins

D'autres détails de l'invention apparaîtront plus clairement à la lecture de la description qui suit, faite en référence aux dessins annexés dans lesquels :
- la figure 1 est une représentation schématique en coupe longitudinale d'un dispositif amortisseur pour composant micromécanique horloger obtenu par le procédé conforme à l'invention,
- la figure 2 est un représentation schématique partielle en coupe longitudinales des déformations du dispositif amortisseur pour composant micromécanique horloger représenté sur la figure 1,
- la figure 3 est une représentation schématique en coupe d'une première variante d'exécution du dispositif amortisseur pour composant micromécanique horloger
- la figure 4 est une représentation schématique en coupe d'une seconde variante d'exécution du dispositif amortisseur pour composant micromécanique horloger
- la figure 5 est une vue en perspective d'une troisième variante d'exécution du dispositif amortisseur pour composant micromécanique horloger

### Mode de réalisation de l'invention

On décrira ci-après un dispositif amortisseur de chocs et/ou de vibrations pour pièces d'horlogerie particulièrement adaptée pour une bride antichoc, ladite bride antichoc tenant le mouvement à l'intérieur du boitier, et pour une butée antichoc pour une pièce d'horlogerie comprenant un système à guidage flexible comportant un pivot virtuel ; toutefois il est bien évident que le dispositif amortisseur de choc pourra être adapté pour amortir les chocs et/ou les vibrations entre deux pièces d'une pièce d'horlogerie telle qu'un oscillateur horloger, un mouvement horloger ou similaire ou entre deux pièces d'un composant micromécanique quelconque sans pour autant sortir du cadre de l'invention. Ledit dispositif amortisseur pourra ainsi être intégré aussi bien sur des composants internes au mouvement qu'à l'extérieur du mouvement. Il pourra être aménagé directement sur une pièce à protéger, autour de la pièce, sur un élément extérieur susceptible de l'endommager, ou encore faire office d'attache.

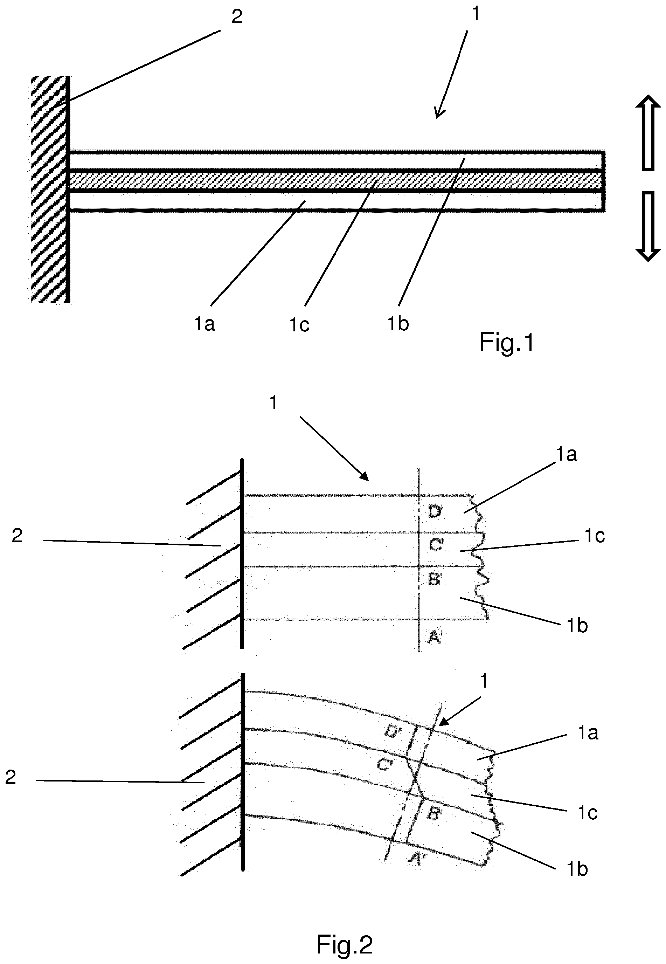

En se référant à la figure 1, qui est une représentation schématique du dispositif amortisseur pour pièces d'horlogerie ledit dispositif amortisseur 1 est constitué de deux lames flexibles la et 1b, rectilignes, s'étendant sensiblement parallèlement l'une au dessus de l'autre, et d'une couche dite dissipative 1c s'étendant entre lesdites lames flexibles 1a et 1b et étant solidaire, sur tout ou partie de sa longueur, desdites lames flexibles la et 1b. La couche dissipative 1c est solidarisée aux lames flexibles 1a et 1b par tout moyen approprié tel que par collage, par ajout de matière, etc., la force d'adhésion de la couche dissipative 1c avec les lames flexibles 1a et 1b devant être suffisante pour éviter un délaminage lorsqu'une contrainte est appliquée sur le dispositif amortisseur.

Dans cet exemple de réalisation particulier, les lames flexibles la et lb ainsi que la couche dissipative 1c présente une section transversale rectangulaire ; toutefois, il est bien évident que les lames flexibles 1a et 1b ainsi que la couche dissipative 1c pourront présenter une section transversale de forme quelconque sans pour autant sortir du cadre de l'invention telle que définie dans les revendications.

Les lames flexibles 1a et 1b sont obtenues dans un matériau élastique afin que le repositionnement du dispositif amortisseur dans sa position initiale de repos soit parfait, i.e. qu'il n'y ait pas de déformation plastique. Ainsi, les lames flexibles 1a et 1b sont obtenues dans tout matériau présentant un module de Young élevé, i.e. un module de Young supérieur ou égal à 50 Gpa choisi parmi les métaux, les céramiques ou les cristaux tels que le silicium. Le silicium présente les avantages de présenter aucune fatigue, d'être amagnétique et de permettre la fabrication de pièces en série avec une grande précision tout en offrant une grande liberté de conception.

La couche dissipative 1c est obtenue dans un matériau viscoélastique présentant un module de cisaillement faible, i.e. un module de cisaillement de préférence inférieur à 10 GPa, un facteur de perte d'au moins 0,1, et de préférence dans un polymère. De préférence, la couche dissipative 1c présente un module de cisaillement au moins 10 fois inférieur au module de cisaillement de la ou des lames flexibles la et 1b. Ledit polymère consiste de préférence dans un élastomère choisi parmi la liste comprenant les polyuréthanes, le cis-1,4-polyisoprène (NR), le polyisoprène synthétique (IR), le polybutadiène (BR), le copolymère styrène-butadiène (SBR), les polyisoprènes, les polyisobutylènes, les copolymères butadiène-acrylonitrile, les copolymères éthylène-propylène, les terpolymères éthylène-propylène-diène, le polyéther bloc amide (PEBA), les polyoléfines élastomères telles que le polyisobutylène (PIB), l'éthylène-propylène (EPR ou EPM) et l'éthylène-propylène-diène-monomère (EPDM), le copolymère éthylène-acétate de vinyle (EVA ou EVM), le copolymère éthylène acrylique (AEM), les élastomères polyacryliques (ACM), les élastomères d'épichlorhydrine (CO et ECO), ou une combinaison de ces derniers.

Par ailleurs, les lames flexibles 1a, 1b présentent une longueur au moins 3 à 100 fois supérieure à l'épaisseur des lames flexibles la, 1b, et préférentiellement une longueur au moins 5 à 30 fois supérieure à l'épaisseur des lames flexibles la, 1b, ladite longueur des lames flexibles la et 1b, et in fine de la couche dissipative 1c , est comprise entre 0,1 et 10 mm.

De préférence, l'épaisseur de la couche dissipative est comprise entre 10 µm et 2 mm, et plus préférentiellement entre 10 µm et 1 mm, et le poids du dispositif amortisseur est compris entre 0,01 gramme et 50 grammes.

Il est bien évident que la couche dissipative 1c pourra être obtenue dans une pluralité de matériaux viscoélastiques et/ou que le matériau viscoélastique pourra comporter une charge quelconque pour modifier son comportement. Ainsi, la couche dissipative 1c pourra être constituée d'un empilement d'au moins deux couches obtenues dans au moins deux matériaux viscoélastiques différents ou être constituée d'au moins deux segments respectivement obtenus dans un matériau viscoélastique. On notera qu'une telle construction permet d'adapter l'impédance du dispositif amortisseur de chocs et/ou de vibrations en fonction du domaine d'application de l'invention.

De préférence, la couche dissipative 1c présente un facteur d'amortissement au moins 5 fois supérieur au facteur d'amortissement des lames flexibles la, 1b.

Selon une variante d'exécution, non représenté sur les figures, le dispositif amortisseur peut comporter n lames flexibles 1a, 1b, etc. s'étendant sensiblement parallèlement les unes par rapport aux autres et n-1 couches dissipatives 1c, etc. s'étendant entre deux lames flexibles la, 1b consécutives, chaque couche dissipative 1c étant solidaire au moins partiellement desdites deux lames flexibles la, 1b consécutives, et dans lequel n est un nombre entier supérieur ou égal à 3.

Par ailleurs, il est bien évident que les lames flexibles la, 1b pourront être substituées par tout élément flexible de forme quelconque tel qu'un élément flexible sous forme tubulaire par exemple.

De plus, les lames flexibles la, 1b, etc. pourront être incurvées et non rectilignes comme précédemment décrit. Dans ce cas, les lames flexibles la, 1b incurvées présentent un rayon de courbure constant, deux lames flexibles la, 1b incurvées adjacentes présentant un rayon de courbure différent et un même centre de courbure.

On expliquera maintenant le fonctionnement du dispositif amortisseur en référence aux figures 1 et 2.

En référence à la figure 1, le dispositif amortisseur est solidarisé, par encastrement par exemple, à un composant horloger 2. Lorsqu'un effort est appliqué dans la direction verticale du plan de la figure 1 à l'extrémité des lames flexibles la et 1b, les lames flexibles 1a et 1b fléchissent en emmagasinant de l'énergie sous forme élastique essentiellement par la déformation desdites lames flexibles la, 1b comme on peut le voir représenté sur la figure 2. Lors du fléchissement des lames flexibles la et 1b, les points en vis-à-vis B' et C' des deux lames flexibles 1a, 1b se déplacent l'un par rapport à l'autre si bien que la couche dissipative 1c est soumise à un effort de cisaillement entre les deux lames flexibles la, 1b. La déformation de la couche dissipative 1c viscoélastique qui en résulte dissipe de l'énergie sous forme de chaleur.

L'élasticité des lames flexibles 1a et 1b exerce une force de rappel d'autant plus grande que le déplacement est important, résultant en des oscillations autour de la position initiale. La dissipation d'énergie par cisaillement de la couche dissipative 1c permet d'amortir les oscillations et de ramener rapidement les lames flexibles 1a et 1b dans leur position d'origine.

De préférence, les lames flexibles 1a et 1b sont dimensionnées de manière à ce que la fréquence propre de la structure sandwich soit proche de la fréquence principale des chocs et/ou des vibrations à absorber. Ainsi la déformation des lames flexibles 1a et 1b est maximum ce qui entraine un plus grand cisaillement de la couche dissipative 1c et un amortissement plus rapide des oscillations.

On notera que l'énergie d'un choc est essentiellement dissipée par cisaillement de la couche dissipative 1c, ce qui est plus efficace qu'une dissipation par traction ou compression. En effet, pour une force donnée, le déplacement d'une couche mince est plus important en cisaillement qu'en compression, ce qui donne lieu à une hystérèse plus grande et une dissipation d'énergie plus importante.

Par ailleurs, l'homme du métier n'aura pas de difficultés à dimensionner de manière idoine les lames flexibles 1a et 1b ainsi que la couche dissipative en fonction de la fréquence du choc et/ou des vibrations à absorber, la fréquence propre du dispositif amortisseur devant être proche de la fréquence principale du choc et/ou des vibrations à absorber. En effet, il est bien connu de l'homme du métier que la fréquence propre du dispositif amortisseur dépend notamment du matériau et de la géométrie des lames flexibles la, 1b et de la couche dissipative 1c, i.e. du module de Young des différents matériaux composant le dispositif amortisseur, du facteur d'amortissement et du moment quadratique de la section.

De plus, on observera que le dispositif amortisseur présente un encombrement sensiblement équivalent à celui d'une lame flexible homogène. En effet la substitution de matière élastique par de la matière viscoélastique entre deux lames flexibles n'a qu'une faible influence sur le moment quadratique du dispositif amortisseur. Il en résulte que le dispositif amortisseur est une lame flexible pleine de même moment d'inertie ont sensiblement le même encombrement et qu'il est, par conséquent, aisé de pouvoir remplacer les dispositifs antichoc de l'art antérieur par des dispositifs amortisseurs. En effet, les brides de fixation, par exemple, peuvent être remplacées par les brides sans modifier le boîtier ou le mouvement de la montre, les brides présentant un très faible encombrement.

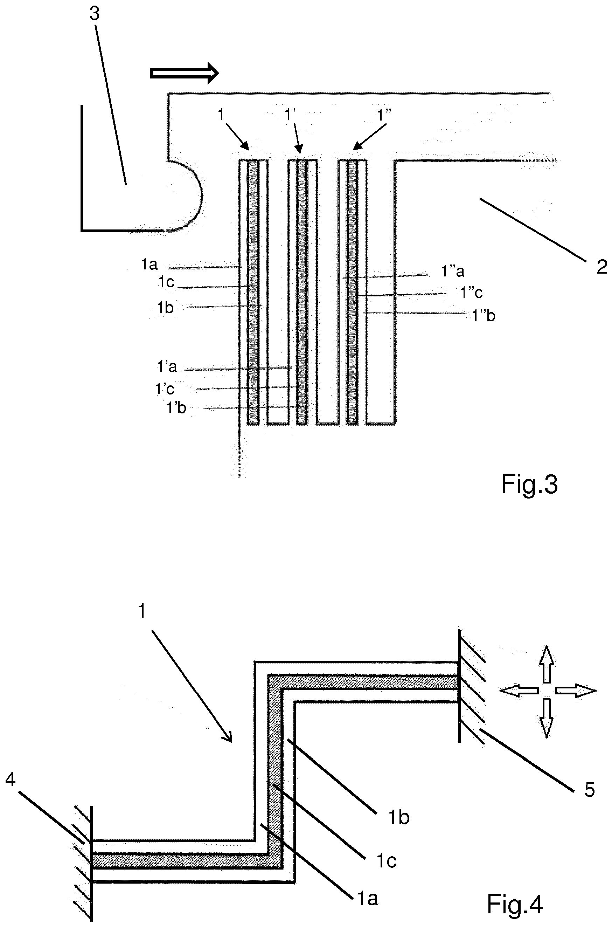

Selon une seconde variante d'exécution du dispositif amortisseur en référence à la figure 3, le dispositif amortisseur 1 est constitué d'une pluralité d'ensembles amortisseurs 1', 1" et 1'" respectivement constitués de deux lames flexibles la, 1b; 1'a, 1'b; 1"a, 1"b s'étendant sensiblement parallèlement et d'une couche dissipative 1c, 1'c, 1"c. Ces ensembles amortisseurs 1, 1' et 1" sont solidaire d'un premier composant horloger 2 fixe, à proximité de l'une des ses extrémités, et s'étendent verticalement dans cet exemple de réalisation. Un deuxième composant horloger 3 mobile, représenté dans sa position de repos, est susceptible de se déplacer relativement au premier composant 2 suite à un choc dans la direction horizontale de la figure 3. En se déplaçant le deuxième composant 3 vient buter contre la première lame flexible la de l'ensemble amortisseur 1 qui se déforme en absorbant et dissipant l'énergie du choc. En fonction de l'intensité du choc, un nombre variable d'ensemble amortisseur 1, 1', 1" est sollicité ce qui permet d'obtenir une butée dont la raideur est croissante avec l'intensité du choc.

On notera que les espaces séparant les différents ensembles amortisseurs 1, 1' et 1" permettent d'obtenir une dissipation d'énergie non seulement par cisaillement des couches dissipatives 1c, 1'c, 1"c mais également par des frottements secs entre les lames flexibles 1b et l'a et éventuellement l'b et 1"a. En effet, pour un choc plus important, l'ensemble amortisseur 1 vient prendre appui sur le second ensemble amortisseur 1' en frottant sur ce dernier, le second amortisseur 1" pouvant également prendre appui sur le troisième ensemble amortisseur 1" et dissiper une partie de l'énergie par frottement.

Bien évidemment, la longueur et l'épaisseur des lames flexibles et de la couche dissipative, l'espace séparant deux ensembles amortisseurs consécutifs, ainsi que le nombre d'ensembles amortisseurs consécutifs sont déterminées en fonction de l'intensité des chocs et des fréquences à absorber, l'homme du métier n'ayant pas de difficultés pour déterminer ces éléments.

Il va de soi que le second composant horloger 3 peut consister en un balancier, une ancre, un rouage ou tout autre élément mobile présent dans le mouvement d'une montre et que les ensembles amortisseurs 1, 1', 1" peuvent être solidaires du second composant horloger 3 mobile et/ou du premier composant horloger 2 fixe. De plus, il est bien évidement que le dispositif amortisseur pourra comprendre un nombre quelconque d'ensembles amortisseurs 1, 1', 1".

Selon une troisième variante d'exécution du dispositif amortisseur, en référence à la figure 4, ce dernier consiste en une bride antichoc pour une pièce d'horlogerie qui comprend au moins un boitier 4 et un mouvement 5 s'étendant à l'intérieur dudit boitier 4, ledit boitier 4 et le mouvement 5 n'étant représentés que schématiquement. Ladite bride antichoc est constituée d'un dispositif amortisseur 1, tel que décrit précédemment, comprenant au moins deux lames flexibles 1a et 1b s'étendant sensiblement parallèlement et au moins une couche dissipative 1c s'étendant entre lesdites lames flexibles la et 1b, ladite couche dissipative 1c étant solidaire au moins partiellement de chacune des lames flexibles la et 1b. Chaque lame flexible la et 1b, et in fine la couche dissipative 1c, comporte une partie centrale rectiligne et deux parties distales rectilignes s'étendant sensiblement perpendiculairement à la partie centrale et s'étendant depuis les extrémités de ladite partie centrale de part et respectivement d'autre de cette dernière, l'extrémité libre d'une première partie distale étant solidaire du boitier 4 et l'extrémité libre de la seconde partie distale étant solidaire du mouvement 5.

Dans cet exemple particulier de réalisation, les lames flexibles 1a et 1b sont réalisées dans de l'acier inoxydable et la couche dissipative 1c est obtenue, par exemple, dans de l'adhésif acrylique, du polyuréthane ou de la résine époxy adhérant aux lames flexibles la et 1b.

Ainsi, le dispositif amortisseur 1 présente une forme en « S » de manière à pouvoir se déformer et amortir des chocs dans le plan de la figure 4, c'est à dire selon une combinaison quelconque de déplacement dans les directions horizontales et verticales de la figure 4. De la même manière que dans les modes de réalisation précédemment décrit, la déformation du dispositif amortisseur 1 lors d'un choc provoque un déplacement relatif des lames flexibles 1a et 1b qui procure un cisaillement de la couche dissipative 1c et l'amortissement des oscillations. Les lames flexibles la, 1b ramènent le mouvement 5 dans sa position initiale de repos.

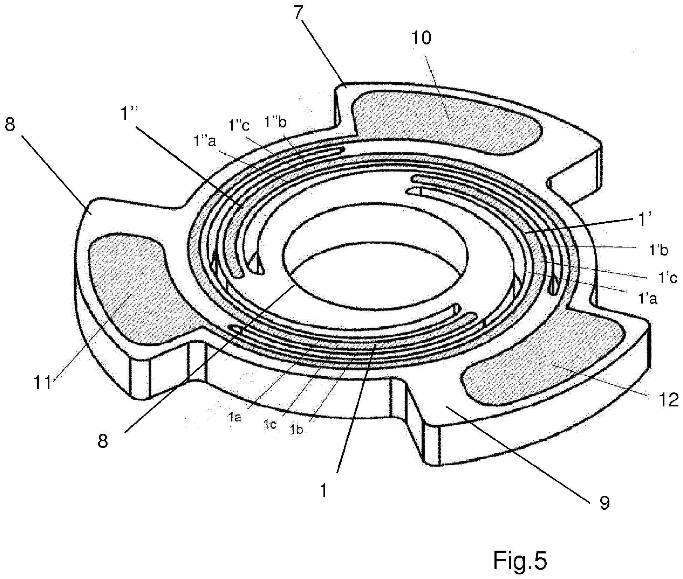

Selon une dernière variante d'exécution du dispositif amortisseur, en référence à la figure 5, ce dernier consiste en une butée antichoc pour une pièce d'horlogerie comprenant un système à guidage flexible comportant un pivot virtuel tel que décrit dans le document EP 2 090 941 par exemple. Ladite butée antichoc est constituée d'une couronne centrale 6 depuis laquelle s'étend trois dispositifs amortisseurs 1, 1' et 1", uniformément répartis autour de la couronne 6, chaque dispositif amortisseur 1, 1' et 1" étant constitué d'au moins deux lames flexibles 1a, 1b; 1'a, 1'b; 1"a, 1"b incurvées de longueurs et de rayons de courbure différents, suivant un motif de spirale, le centre de la spirale étant confondu avec l'axe central de la couronne 6, et d'une couche dissipative 1c, 1'c, 1"c s'étendant entre lesdites lames flexibles la, 1b ; 1 'a, 1'b ; 1"a, 1"b incurvées.

L'extrémité libre de chaque dispositif amortisseur est terminée par une excroissance radiale 7, 8 et 9 comprenant un évidement 10, 11 et respectivement 12 rempli d'un matériau viscoélastique formant la couche dissipative 1c, 1'c, 1"c, ladite excroissance radiale 7,8 et 9 étant solidaire de la lame flexible extérieure d'un dispositif amortisseur 1, 1', 1" adjacent.

On notera que les deux lames flexibles 1a, 1b; 1'a, 1'b ; 1"a, 1"b des ensembles amortisseurs 1, 1', 1" présentent des rayons de courbure et des longueurs différentes, lesdites lames flexibles 1a, 1b ;1'a, 1'b ; 1"a, 1"b étant encastrées à la couronne 6 centrale en deux points éloignés l'un de l'autre. Ces lames flexibles la, 1b ; 1'a, 1'b ; 1"a, 1"b n'ayant pas la même longueur, elles ne présentent pas la même raideur de sorte que, lors d'un mouvement hors plan, leurs déplacements sont différents procurant un cisaillement important de la couche dissipative 1c en polymère. Par ailleurs, lors de mouvements dans le plan, la différence de courbure entre les lames flexibles la, 1b ; 1'a, 1'b; 1"a, 1"b procure un cisaillement de la couche dissipative 1c. Ainsi, le cisaillement de la couche dissipative 1c est assuré, pour les mouvements hors-plan, par la différence de longueur des lames flexibles la, 1b ; 1'a, 1'b; 1"a, 1"b et, pour les mouvements dans le plan, par leur différence de rayon de courbure. Pour les mêmes raisons, les rotations autour de l'axe radial sont également amorties alors que les rotations autour de l'axe principal ne sont pas freinées n'affectant ainsi pas le fonctionnement normal du pivot. Par conséquent, l'énergie cinétique d'un choc est donc avantageusement dissipée dans toutes les directions parasites.

Cet agencement des dispositifs amortisseurs 1 en spiral autour d'un couronne centrale répartit avantageusement les déformations et limite ainsi les concentrations de contraintes. Par ailleurs, dans cet exemple particulier de réalisation, la butée antichoc comporte trois dispositifs amortisseurs de manière à maximiser la distance angulaire et radiale entre les points d'encastrement des lames flexibles 1a, 1b; 1'a, 1'b ; 1"a, 1"b, tout en garantissant un isostatisme sans plan de symétrie au système ; toutefois, il est bien évident que la butée antichoc pourra comporter un nombre quelconque de dispositifs amortisseurs 1, 1', 1".

De manière avantageuse, le procédé de fabrication de la butée antichoc, consiste à former d'une part une couronne centrale 6 et trois paires de lames flexibles 1a, 1b ; 1'a, 1'b ; 1"a, 1"b incurvées parallèles et un évidement 7, 8, 9 formant un réservoir, chaque évidement 7, 8, 9 débouchant entre les deux lames flexibles la, 1b ; 1'a, 1'b; 1"a, 1"b, à partir d'un wafer en silicium puis à déposer, dans l'évidement, une matière polymérisable sous forme liquide présentant, après polymérisation, un module de cisaillement inférieur au module de cisaillement du silicium et un facteur d'amortissement supérieur au facteur d'amortissement du silicium, puis, après que ladite matière polymérisable se soit répandue par capillarité dans tout l'espace séparant les deux lames flexibles 1a, 1b ; 1'a, 1'b ; 1"a, 1"b, à polymériser ladite matière polymérisable. Ladite matière polymérisable consiste en un polymère photosensible, et de préférence en du polyuréthane photosensible, et l'étape de polymérisation consiste à exposer ladite matière polymérisable à un rayonnement ultraviolet. Un tel procédé de fabrication permet de procurer une adhérence optimale entre les lames flexibles la, 1b ; 1'a, 1'b ; 1"a, 1"b et la couche dissipative 1c.

On notera que le polymère photosensible pourra être substitué par un polymère thermosensible tel que le polyéthylène par exemple.

D'une manière générale, et de préférence, le procédé de fabrication d'un dispositif amortisseur comporte au moins les étapes suivantes de :
a. formation d'au moins deux éléments flexibles ainsi qu'un évidement formant un réservoir, ledit évidement débouchant entre les deux éléments flexibles,
b. dépôt, dans ledit évidement, d'une matière polymérisable sous forme liquide présentant, après polymérisation, un module de cisaillement inférieur au module de cisaillement des éléments flexibles et un facteur d'amortissement supérieur au facteur d'amortissement des éléments flexibles (1a, 1b),
c. après que ladite matière polymérisable se soit répandu par capillarité dans au moins une partie de l'espace séparant les deux éléments flexibles (1a, 1b), polymérisation de ladite matière polymérisable.

Par ailleurs, de préférence, lesdits éléments flexibles s'étendent sensiblement parallèlement et sont obtenus dans du silicium, à partir d'un wafer en silicium par exemple. De plus, préférentiellement, la matière polymérisable se répand dans la totalité de l'évidement et de l'espace séparant les deux éléments flexibles.

## Revendications

1. Procédé de fabrication d'un dispositif amortisseur (1) de chocs et/ou de vibrations comprenant au moins deux éléments flexibles (1a,1b) chacun étant apte à se déformer sous l'effet d'une contrainte et au moins une couche dite dissipative (1c); la couche dite dissipative (1c) étant obtenue dans au moins un matériau présentant un module de cisaillement inférieur au module de cisaillement de chaque dit élément flexible (1a, 1b), un facteur d'amortissement supérieur au facteur d'amortissement de chaque dit élément flexible (1a, 1b), et solidaire au moins partiellement de chaque dit élément flexible (1a, 1b) de telle sorte qu'une flexion desdits au moins deux éléments flexibles (1a, 1b), sous l'effet d'une contrainte, procure un cisaillement de la couche dissipative (1c) permettant de dissiper au moins une partie de l'énergie de ladite contrainte; le procédé comprenant l'étape de:
former lesdits au au moins deux éléments flexibles (1a, 1b) parallèles;
**caractérisé en ce que** le procédé comprend en outre les étapes de:
déposer, entre lesdits éléments flexibles, une matière polymérisable sous forme liquide présentant, après polymérisation, un module de cisaillement inférieur au module de cisaillement dudit élément flexible (1a, 1b) et un facteur d'amortissement supérieur au facteur d'amortissement desdits éléments flexibles (1a, 1b); et
polymériser ladite matière polymérisable.

2. Le procédé selon la revendication 1, comprenant en outre les étapes de:
former un évidement formant un réservoir, ledit évidement débouchant entre les deux éléments flexibles (1a, 1b),
déposer, dans l'évidement, ladite matière polymérisable sous forme liquide; et
après que ladite matière polymérisable se soit répandue par capillarité dans l'espace séparant les deux éléments flexibles (1a, 1b), polymériser ladite matière polymérisable.

3. Le procédé selon l'une quelconque des revendications 1 ou 2, dans lequel le dispositif amortisseur (1) comporte n éléments flexibles (1a, 1b) s'étendant sensiblement parallèlement les uns par rapport aux autres et n-1 couches dissipatives (1c) s'étendant entre deux éléments flexibles (1a, 1b) consécutifs, chaque couche dissipative (1c) étant solidaire au moins partiellement desdits deux éléments flexibles (1a, 1b) consécutifs, et dans lequel n est un nombre entier supérieur ou égal à 3.

4. Le procédé selon l'une quelconque des revendications 1 à 3 **caractérisé en ce que** la au moins une couche dissipative (1c) présente un module de cisaillement au moins 10 fois inférieur au module de cisaillement des éléments flexibles (1a, 1b).

5. Le procédé selon l'une quelconque des revendications 1 à 4 **caractérisé en ce que** la au moins une couche dissipative (1c) présente un facteur d'amortissement au moins 5 fois supérieur au facteur d'amortissement des éléments flexibles (1a, 1b).

6. Le procédé selon l'une quelconque des revendications 1 à 5 **caractérisé en ce que** chaque élément flexible (1a, 1b) comporte une partie centrale rectiligne et deux parties distales rectilignes s'étendant sensiblement perpendiculairement à la partie centrale et s'étendant depuis les extrémités de ladite partie centrale de part et respectivement d'autre de cette dernière.

7. Le procédé selon l'une quelconque des revendications 1 à 6 **caractérisé en ce que** les éléments flexibles (1a, 1b) et la ou les couches dissipatives (1c) présentent une longueur au moins 3 à 100 fois supérieure à l'épaisseur desdits éléments flexibles (1a, 1b) et, préférentiellement, 5 à 30 fois supérieure à l'épaisseur desdits éléments flexibles (1a, 1b).

8. Le procédé selon l'une quelconque des revendications 1 à 7 **caractérisé en ce que** les éléments flexibles (1a, 1b) présentent une longueur comprise entre 0,1 et 10 mm.

9. Le procédé selon l'une quelconque des revendications 1 à 8 dans lequel le dispositif amortisseur (1) comporte une pluralité d'ensembles amortisseurs (1, 1', 1") respectivement constitués, chacun, d'au moins deux éléments flexibles (1a, 1b ; 1'a, 1'b ; 1"a, 1"b) et d'au moins une couche dissipative (1c, 1'c, 1"c), lesdits ensembles amortisseurs (1, 1', 1") étant séparés par un espace vide.

## Patentansprüche

1. Verfahren zur Herstellung einer Vorrichtung zur Dämpfung (1) von Stößen und/oder von Schwingungen, welche wenigstens zwei flexible Elemente (1a, 1b), die jeweils geeignet sind, sich unter der Wirkung einer Belastung zu verformen, und wenigstens eine sogenannte dissipative Schicht (1c) umfasst; wobei die sogenannte dissipative Schicht (1c) aus wenigstens einem Material ausgebildet ist, das ein Schubmodul, das kleiner als das Schubmodul jedes flexiblen Elements (1a, 1b) ist, und einen Dämpfungsfaktor, der größer als der Dämpfungsfaktor jedes flexiblen Elements (1a, 1b) ist, aufweist, und wenigstens teilweise mit jedem flexiblen Element (1a, 1b) fest verbunden ist, derart, dass eine Biegung der wenigstens zwei flexiblen Elemente (1a, 1b) unter der Wirkung einer Belastung eine Scherung der dissipativen Schicht (1c) bewirkt, die es ermöglicht, wenigstens einen Teil der Energie der Belastung abzuleiten; wobei das Verfahren den Schritt umfasst:
Ausbilden der wenigstens zwei parallelen flexiblen Elemente (1a, 1b);
**dadurch gekennzeichnet, dass** das Verfahren außerdem die Schritte umfasst:
Einbringen, zwischen den flexiblen Elementen, eines polymerisierbaren Materials in flüssiger Form, das nach einer Polymerisation ein Schubmodul, das kleiner als das Schubmodul des flexiblen Elements (1a, 1b) ist, und einen Dämpfungsfaktor, der größer als der Dämpfungsfaktor der flexiblen Elemente (1a, 1b) ist, aufweist; und
Polymerisieren des polymerisierbaren Materials.

2. Verfahren nach Anspruch 1, welches außerdem die Schritte umfasst:
Ausbilden einer Vertiefung, die einen Behälter bildet, wobei die Vertiefung zwischen den zwei flexiblen Elementen (1a, 1b) mündet;
Einbringen des polymerisierbaren Materials in flüssiger Form in die Vertiefung; und
nachdem sich das polymerisierbare Material durch Kapillarwirkung in dem Raum ausgebreitet hat, der die zwei flexiblen Elemente (1a, 1b) trennt, Polymerisieren des polymerisierbaren Materials.

3. Verfahren nach einem der Ansprüche 1 oder 2, wobei die Vorrichtung zur Dämpfung (1) n flexible Elemente (1a, 1b), die sich im Wesentlichen parallel zueinander erstrecken, und n-1 dissipative Schichten (1c), die sich zwischen zwei aufeinander folgenden flexiblen Elementen (1a, 1b) erstrecken, aufweist, wobei jede dissipative Schicht (1c) wenigstens teilweise mit den zwei aufeinander folgenden flexiblen Elementen (1a, 1b) fest verbunden ist und wobei n eine ganze Zahl größer oder gleich 3 ist.

4. Verfahren nach einem der Ansprüche 1 bis 3, **dadurch gekennzeichnet, dass** die wenigstens eine dissipative Schicht (1c) ein Schubmodul aufweist, das höchstens ein Zehntel des Schubmoduls der flexiblen Elemente (1a, 1b) beträgt.

5. Verfahren nach einem der Ansprüche 1 bis 4, **dadurch gekennzeichnet, dass** die wenigstens eine dissipative Schicht (1c) einen Dämpfungsfaktor aufweist, der mindestens das 5-Fache des Dämpfungsfaktors der flexiblen Elemente (1a, 1b) beträgt.

6. Verfahren nach einem der Ansprüche 1 bis 5, **dadurch gekennzeichnet, dass** jedes flexible Element (1a, 1b) einen geraden mittleren Teil und zwei gerade distale Teile, die sich im Wesentlichen senkrecht zu dem mittleren Teil erstrecken und sich von den Enden des mittleren Teils aus auf der einen bzw. anderen Seite dieses Letzteren erstrecken, aufweist.

7. Verfahren nach einem der Ansprüche 1 bis 6, **dadurch gekennzeichnet, dass** die flexiblen Elemente (1a, 1b) und die dissipative(n) Schicht(en) (1c) eine Länge aufweisen, die mindestens das 3- bis 100-Fache der Dicke der flexiblen Elemente (1a, 1b) und vorzugsweise das 5- bis 30-Fache der Dicke der flexiblen Elemente (1a, 1b) beträgt.

8. Verfahren nach einem der Ansprüche 1 bis 7, **dadurch gekennzeichnet, dass** die flexiblen Elemente (1a, 1b) eine Länge zwischen 0,1 und 10 mm aufweisen.

9. Verfahren nach einem der Ansprüche 1 bis 8, wobei die Vorrichtung zur Dämpfung (1) mehrere Dämpfungsanordnungen (1, 1', 1") aufweist, die jeweils aus wenigstens zwei flexiblen Elementen (1a, 1b; 1'a, 1'b; 1"a, 1"b) und wenigstens einer dissipativen Schicht (1c, 1'c, 1"c) bestehen, wobei die Dämpfungsanordnungen (1, 1', 1") durch einen leeren Zwischenraum getrennt sind.

## Claims

1. Method for manufacturing a damping device (1) for damping impacts and/or vibrations comprising at least two flexible elements (1a, 1b) each being able to be deformed under the effect of a strain and at least one so-called dissipative layer (1c); the so-called dissipative layer (1c) being obtained in at least one material having a shear modulus lower than the shear modulus of each said flexible element (1a, 1b), a damping factor greater than the damping factor of each said flexible element (1a, 1b), and secured at least partially to each said flexible element (1a, 1b) such that a bending of said at least two flexible elements (1a, 1b) under the effect of a strain, results in a shearing of the dissipative layer (1c) allowing at least a portion of the energy of said strain to be dissipated; the method comprising the step of:
forming said at least two parallel flexible elements (1a, 1b) ;
**characterized in that** the method also comprises the steps of:
depositing, between said flexible elements, a polymerizable material in liquid form having, after polymerization, a shear modulus lower than the shear modulus of said flexible element (1a, 1b) and a damping factor greater than the damping factor of said flexible elements (1a, 1b) ; and
polymerizing said polymerizable material.

2. Method according to Claim 1, further comprising the steps of:
forming a recess forming a reservoir, said recess emerging between the two flexible elements (1a, 1b), depositing, in the recess, said polymerizable material in liquid form; and
after said polymerizable material has spread by capillarity in the space separating the two flexible elements (1a, 1b),polymerizing said polymerizable material.

3. Method according to either one of Claims 1 or 2, in which the damping device (1) comprises n flexible elements (1a, 1b) extending substantially parallel to one another and n-1 dissipative layers (1c) extending between two consecutive flexible elements (1a, 1b), each dissipative layer (1c) being secured at least partially to said two consecutive flexible elements (1a, 1b), and in which n is an integer number greater than or equal to 3.

4. Method according to any one of Claims 1 to 3, **characterized in that** the at least one dissipative layer (1c) has a shear modulus at least 10 times lower than the shear modulus of the flexible elements (1a, 1b).

5. Method according to any one of Claims 1 to 4, **characterized in that** the at least one dissipative layer (1c) has a damping factor of at least 5 times greater than the damping factor of the flexible elements (1a, 1b).

6. Method according to any one of Claims 1 to 5, **characterized in that** each flexible element (1a, 1b) comprises a rectilinear central part and two rectilinear distal parts extending substantially at right angles to the central part and extending from the ends of said central part on one side and respectively on the other side thereof.

7. Method according to any one of Claims 1 to 6, **characterized in that** the flexible elements (1a, 1b) and the dissipative layer or layers (1c) have a length at least 3 to 100 times greater than the thickness of said flexible elements (1a, 1b) and, preferentially, 5 to 30 times greater than the thickness of said flexible elements (1a, 1b).

8. Method according to any one of Claims 1 to 7, **characterized in that** the flexible elements (1a, 1b) have a length of between 0.1 and 10 mm.

9. Method according to any one of Claims 1 to 8, in which the damping device (1) comprises a plurality of damping assemblies (1, 1', 1") respectively each composed of at least two flexible elements (1a, 1b ; 1'a, 1'b ; 1"a, 1"b) and at least one dissipative layer (1c, 1'c, 1"c), said damping assemblies (1, 1', 1") being separated by an empty space.
